# EUROPEAN PATENT APPLICATION

(11) **EP 3 434 734 A1**
(43) Date of publication of application: **30.01.2019**
(21) Application number: 17779153.0
(22) Date of filing: 04.04.2017
(51) Int. Cl.: C08L 101/12, B32B 27/20, C08K 3/34, C08L 63/00

(54) **RESIN COMPOSITION, HYDROGEN GAS BARRIER MATERIAL, CURED PRODUCT, COMPOSITE MATERIAL, AND STRUCTURE**

(30) Priority: 05.04.2016 JP 2016076016
(71) Applicant: Hitachi Chemical Co., Ltd., Chiyoda-ku Tokyo 100-6606 (JP)
(72) Inventor: FUKUDA, Kazumasa, Tokyo 100-6606 (JP); TAKEZAWA, Yoshitaka, Tokyo 100-6606 (JP); MARUYAMA, Tetsushi, Tokyo 100-6606 (JP); YOSHIDA, Yuka, Tokyo 100-6606 (JP)
(74) Representative: Hoffmann Eitle
(86) International application number: PCT/JP2017/014158
(87) International publication number: WO 2017/175775

(57) **Abstract**

A resin composition, comprising: a thermosetting resin that has a mesogenic group in a molecule and that is capable of forming a smectic structure via a curing reaction; and mica.

## Description

### Technical Field

The present invention relates to a resin composition, a hydrogen gas barrier material, a cured product, a composite material, and a structure.

### Background Art

Conventionally, resin materials having gas barrier properties have been developed in a wide range of fields such as container packaging materials. As a resin material having gas barrier properties, polyvinyl alcohol copolymer, an epoxy resin, and the like are known.

Although a polyvinyl alcohol copolymer is excellent in gas barrier properties, the polymer has a problem that moisture in the environment is easily absorbed and the gas barrier properties gradually decrease by absorbing water. A polyvinyl alcohol copolymer is a thermoplastic resin and is inferior in physical properties as compared with a thermosetting resin.

On the other hand, an epoxy resin is superior to other resins in many points such as adhesiveness, heat resistance, chemical resistance, electrical characteristics, or mechanical properties. Regarding gas barrier properties, however, an epoxy resin is inferior to a polyvinyl alcohol copolymer, or the like.

In order to exhibit high gas barrier properties, highly crystalline resins, resins having high intermolecular interactions and the like are considered to be useful, and in recent years, liquid crystalline resin has been drawing attention as a material exhibiting high gas barrier properties for its unique molecular form.

As the liquid crystalline resin, those having excellent barrier properties such as oxygen, water vapor, fragrance and the like have been studied (see, for example, Patent Documents 1 to 7), and it has been also studied to use a liquid crystalline resin as a liner of a tank (see, for example, Patent Document 8). There is also a report that the gas barrier properties of a liquid crystalline epoxy resin are improved as compared with an epoxy resin having a low crystallinity.

As another technique for improving gas barrier properties, it is known that by adding an inorganic layered mineral to a resin, it is possible to obtain a material excellent in gas barrier properties by a labyrinth effect, and this technique is used for food packaging materials and the like (see, for example, Patent Document 9). A labyrinth effect means an effect that a path through which a molecule passes through a substance becomes longer.

As a material having gas barrier properties, a film of a clay mineral using a resin as a binder has also been developed (see, for example, Patent Documents 10 and 11).

### Related Art Document

### Patent Document

Patent Document 1: Japanese Patent Application Laid-Open (JP-A) No. 2001-500242
Patent Document 2: JP-A No. 2001-151872
Patent Document 3: JP-A No. 2001-342243
Patent Document 4: JP-A No.2002-178414
Patent Document 5: JP-A No.2003-103708
Patent Document 6: JP-A No.2001-30432
Patent Document 7: JP-A No.2001-72750
Patent Document 8: JP-A No. 4-249699
Patent Document 9: JP-A No.7-251489
Patent Document 10: JP-A No.2006-265517
Patent Document 11: JP-A No.2006-188408

### SUMMARY OF THE INVENTION

### Problems to Be Solved by the Invention

Incidentally, in recent years, attention has been paid to hydrogen energy, and materials that are excellent in hydrogen gas barrier properties are being demanded.

Due to the limited use of hydrogen gas in addition to the danger of hydrogen gas, the permeability of hydrogen gas has not been studied so far until recently, and it is thought that hydrogen gas shows the same tendency as gases with relatively small molecular diameters such as helium and nitrogen. However, in recent years, it has been found that hydrogen gas has very high permeability and more severe gas barrier properties than helium or the like are required.

Although the membranes described in Patent Documents 10 and 11 have hydrogen gas barrier properties, they are inferior in physical properties and separate into a resin and a clay mineral under high pressure, and therefore, they could not be used for applications such as high pressure hydrogen storage tank. Therefore, the development of new materials excellent in physical properties and hydrogen gas barrier properties is desired.

The present invention has been made in view of the above circumstances, and an object thereof is to provide a resin composition and a hydrogen gas barrier material capable of forming cured product excellent in physical properties and hydrogen gas barrier properties, a cured product obtained by curing the resin composition or hydrogen gas barrier material, and a composite material and structure containing the cured product.

### Means for Solving the Problems

A specific means for solving the above-described problems includes the following embodiments.
<1> A resin composition, including:
   a thermosetting resin that has a mesogenic group in a molecule and that is capable of forming a smectic structure via a curing reaction; and
   mica.
<2> The resin composition according to <1>, further including a liquid crystalline epoxy monomer represented by the following Formula (1): 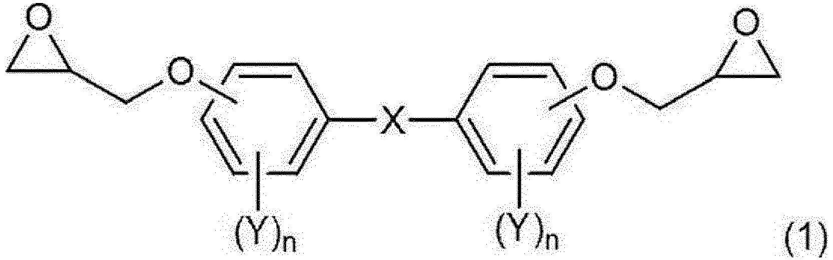 in which, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12: 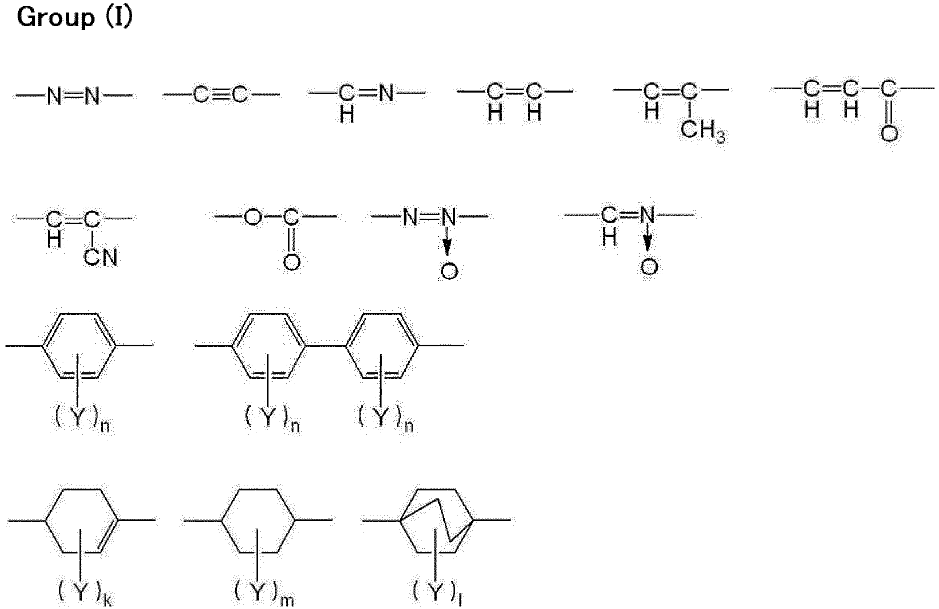
<3> The resin composition according to <1> or <2>, in which a content of the mica is from 5% by mass to 90% by mass.
<4> The resin composition according to any one of <1> to <3>, in which an aspect ratio (average particle diameter/ average thickness) of the mica is in a range of from 1 to 2,000.
<5> A hydrogen gas barrier material including the resin composition according to any one of <1> to <4>.
<6> A cured product obtained by curing the resin composition according to any one of <1> to <4> or the hydrogen gas barrier material according to <5>.
<7> The cured product according to <6>, in which a hydrogen gas permeability coefficient at 25°C is 4.0 × 10⁻¹¹cm³·cm/(cm²·s·cm Hg) or less.
<8> A composite material, including:
   a cured layer including the cured product according to <6> or <7>; and
   a carbon fiber-containing layer that is provided on or above one side or both sides of the cured layer and that includes carbon fibers.
<9> A structure, including:
   an object to be covered; and
   a cured layer that is provided on or above the object to be covered and that includes the resin composition according to any one of <1> to <4> or the cured product of the hydrogen gas barrier material according to <5>.
<10> The structure according to <9>, in which the object to be covered is a high pressure hydrogen storage tank.
<11> The structure according to <9> or <10>, further including a carbon fiber-containing layer that is provided on or above one side or both sides of the cured layer and that includes carbon fibers.

### Effects of the Invention

According to the present invention, a resin composition and a hydrogen gas barrier material capable of forming cured product excellent in physical properties and hydrogen gas barrier properties, a cured product obtained by curing the resin composition or hydrogen gas barrier material, and a composite material and structure containing the cured product can be provided.

### DESCRIPTION OF EMBODIMENTS

Hereinafter, embodiments of the present invention will be described in detail. However, the present invention is not limited to the following embodiments. In the following embodiments, the constituent elements (including the element processes and the like) are not indispensable except when particularly explicitly mentioned. The same applies to numerical values and ranges thereof, and does not limit the present invention.

In the disclosures, each numerical range specified using "(from) ... to ..." represents a range including the numerical values noted before and after "to" as the minimum value and the maximum value, respectively.

In the disclosures, with respect to numerical ranges stated hierarchically herein, the upper limit or the lower limit of a numerical range of a hierarchical level may be replaced with the upper limit or the lower limit of a numerical range of another hierarchical level. Further, in the disclosures, with respect to a numerical range, the upper limit or the lower limit of the numerical range may be replaced with a relevant value shown in any of Examples.

In referring herein to a content of a component in a composition, when plural kinds of substances exist corresponding to a component in the composition, the content means, unless otherwise specified, the total amount of the plural kinds of substances existing in the composition.

In referring herein to a particle diameter of a component in a composition, when plural kinds of particles exist corresponding to a component in the composition, the particle diameter means, unless otherwise specified, a value with respect to the mixture of the plural kinds of particles existing in the composition.

In the disclosures, the term "layer" comprehends herein not only a case in which the layer is formed over the whole observed region where the layer is present, but also a case in which the layer is formed only on part of the region.

### < Resin Composition >

The resin composition in the present embodiment contains: a thermosetting resin having a mesogenic group in a molecule and capable of forming a smectic structure via a curing reaction (hereinafter also referred to as "specific thermosetting resin"); and mica. The resin composition in the present embodiment may contain other components as necessary.

By having the above-described constitution, the resin composition in the present embodiment can form a cured product having excellent physical properties and hydrogen gas barrier properties. The detailed reason why the above effect is achieved is not necessarily clarified, but the present inventors presume as follows.

A specific thermosetting resin contained in the resin composition in the present embodiment has a mesogenic group in the molecule, and can form a smectic structure having high orderliness and excellent hydrogen gas barrier properties by a curing reaction. Meanwhile, mica contained in the resin composition in the present embodiment is an inorganic layered compound, and can improve the hydrogen gas barrier properties by a labyrinth effect. Therefore, it is presumed that by combining the specific thermosetting resin and mica, a cured product having excellent physical properties and hydrogen gas barrier properties can be formed.

Hereinafter, each component constituting the resin composition in the present embodiment will be described.

### (Thermosetting Resin)

The resin composition in the present embodiment contains a specific thermosetting resin having a mesogenic group in the molecule and capable of forming a smectic structure via a curing reaction. The specific thermosetting resin may be used singly, or two or more kinds thereof may be used in combination.

Here, the mesogenic group refers to a functional group that makes it easy to express crystallinity or liquid crystallinity by a function of intermolecular interaction. Specific examples thereof include a biphenyl group, a phenylbenzoate group, an azobenzene group, a stilbene group, and a derivative thereof.

In a case in which a thermosetting resin having a mesogenic group in the molecule is cured, a high-order structure having high regularity derived from a mesogenic group is formed. The high order structure means a structure including a high order structure in which its constituent elements are arranged to form a micro ordered structure, and, for example, corresponds to a crystal phase and a liquid crystal phase. Whether such a high order structure exists or not can be easily determined by observation with a polarization microscope. In other words, in a case in which interference fringes due to depolarization are found in the observation in a crossed-Nicols state, it can be determined that a high order structure exists. The high order structure is usually present in an island shape in a resin and forms a domain structure. Each of the islands forming the domain structure is called a high order structure. The structural units constituting the high order structure are bonded each other generally by a covalent bond.

In particular, from the viewpoint of hydrogen gas barrier properties, the resin composition in the present embodiment contains a specific thermosetting resin capable of forming a smectic structure via a curing reaction.

Examples of high order structures having high regularity derived from a mesogenic group include a nematic structure and a smectic structure. The nematic structure is a high order structure in which the long molecular axes are oriented in a uniform direction and have only orientation order. On the other hand, the smectic structure is a high-ordered structure having a one-dimensional positional order and a layer structure in addition to orientation order. Therefore, the orderliness of the molecule is higher in the smectic structure than in the nematic structure. For this reason, the hydrogen gas barrier properties of a cured product are also higher in a case of forming a smectic structure than in a case of forming a nematic structure.

Whether or not the resin forms a smectic structure in a cured product can be determined by performing X-ray diffraction measurement of the cured product using an X-ray analyzer (for example, manufactured by Rigaku Corporation). When measurement is carried out using CuKα1 rays at a tube voltage: 40 kV, a tube current: 20 mA, and a measuring range: 2θ being from 2° to 30°, a diffraction peak appears in the range of 2θ being from 2° to 5° for a cured product in which the resin forms a smectic structure.

Here, examples of the thermosetting resin having a mesogenic group in the molecule include an epoxy resin, a polyimide resin, a polyamide imide resin, a triazine resin, a phenol resin, a melamine resin, a polyester resin, a cyanate ester resin, and a modified resin thereof.

From the viewpoint of heat resistance, the thermosetting resin having a mesogenic group in the molecule is preferably at least one selected from the group consisting of an epoxy resin, a phenol resin and a triazine resin, and from the viewpoint of adhesiveness, an epoxy resin is more preferable.

For the specific description of the epoxy resin having a mesogenic group in the molecule, for example, the description in Japanese Patent No. 4118691 can be referred to.

Whether or not the resin in the cured product has the anisotropic structure described in Japanese Patent No. 4118691 can be determined by performing X-ray diffraction measurement of the cured product using an X-ray analyzer (for example, manufactured by Rigaku Corporation). In a case in which measurement is carried out using CuKα1 rays at a tube voltage: 40 kV, a tube current: 20 mA, and a measuring range: 2θ being from 2° to 30°, a diffraction peak appears in the range of 2θ being from 2° to 10° for a cured product having the anisotropic structure described in Japanese Patent No. 4118691.

The resin composition in the present embodiment preferably contains a liquid crystalline epoxy monomer represented by the following Formula (1) as a thermosetting resin having a mesogenic group in the molecule. The liquid crystalline epoxy monomer represented by Formula (1) may be used singly, or two or more kinds thereof may be used in combination.

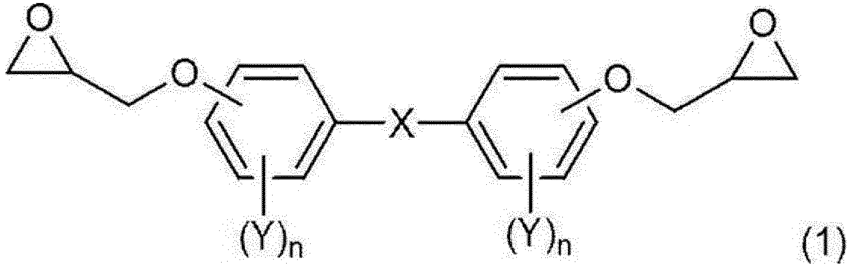

In Formula (1), X represents a single bond or at least one kind of linking group selected from the following Group (I) consisting of divalent groups. Each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group. Each n independently represents an integer from 0 to 4; k represents an integer from 0 to 7; m represents an integer from 0 to 8; and 1 represents an integer from 0 to 12.

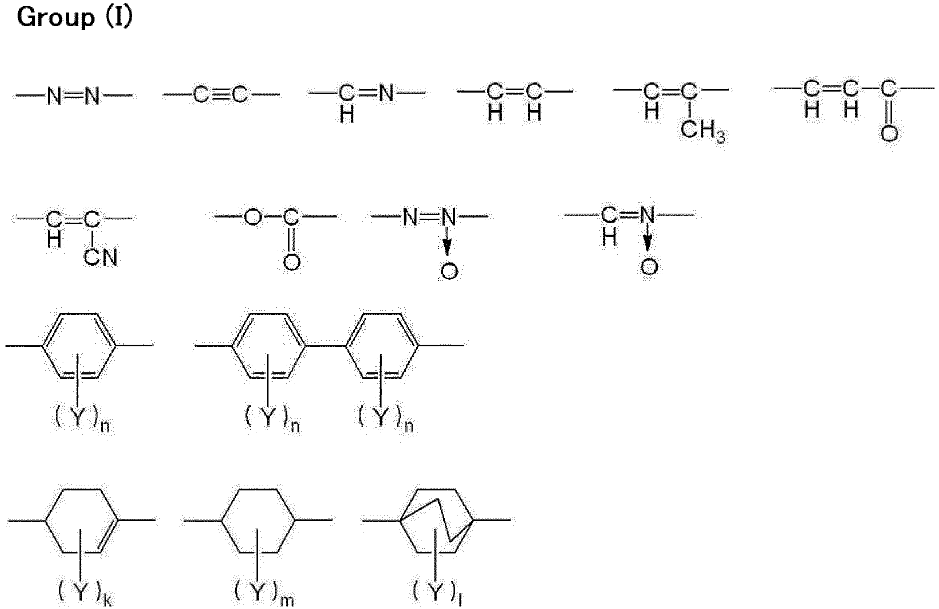

In the Group (I) consisting of divalent groups, a linking direction of each divalent group may be any direction.

X in Formula (1) is preferably at least one kind of linking group selected from the following Group (II) consisting of divalent groups.

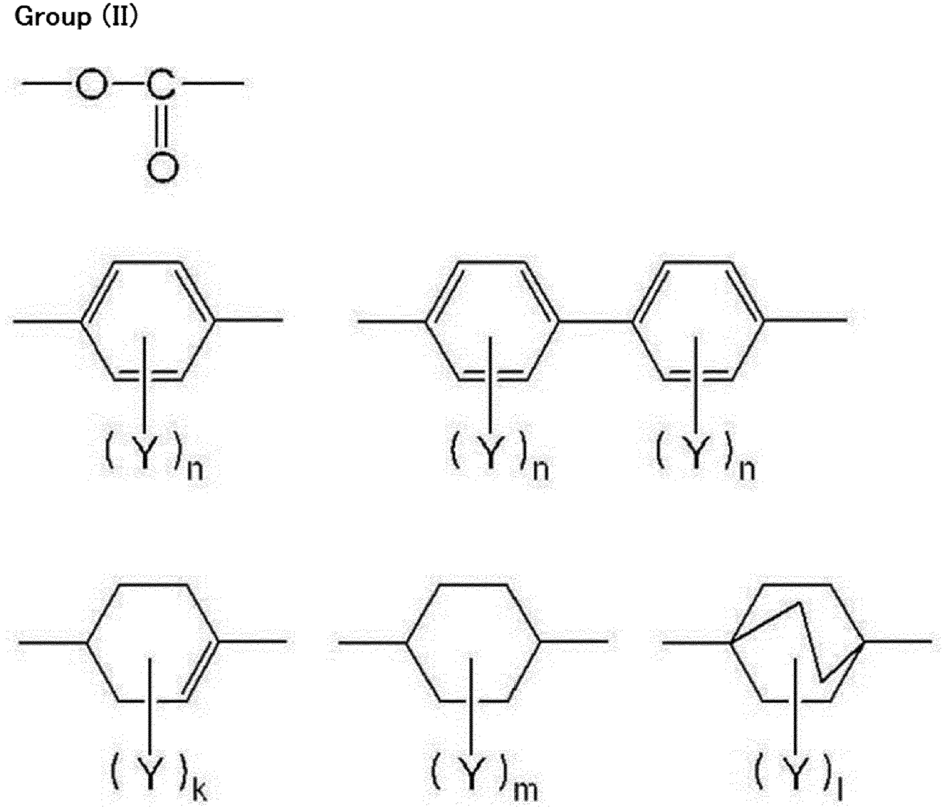

In Formula (1), it is preferable that each Y is independently an aliphatic hydrocarbon group having from 1 to 4 carbon atoms, an aliphatic alkoxy group having from 1 to 4 carbon atoms, a fluorine atom, a chlorine atom, a bromine atom, an iodine atom, a cyano group, a nitro group, or an acetyl group, it is more preferable that each Y is independently a methyl group, an ethyl group, a methoxy group, an ethoxy group, or chlorine atom, and it is still more preferable that each Y is independently a methyl group, or an ethyl group.

In Formula (1), it is preferable that each n is independently an integer from 0 to 2, and it is more preferable that each n is independently an integer from 0 or 1. k is preferably an integer from 0 to 3, and more preferably 0 or 1. m is preferably an integer from 0 to 4, and more preferably 0 or 1. 1 is preferably an integer from 0 to 4, and more preferably 0 or 1.

The liquid crystalline epoxy monomer represented by Formula (1) preferably has a structure of the mesogenic group in which three or more 6-membered ring groups are connected contained in a straight chain manner, from the viewpoint of easily forming a high order structure. The number of the linearly linked 6-membered ring groups contained in the mesogenic group is preferably 3 or more, and more preferably 3 or 4 from the viewpoint of formability.

The linearly connected 6-membered ring group contained in the mesogenic group may be a 6-membered ring group derived from an aromatic ring such as benzene, or a 6-membered cyclic group derived from an aliphatic ring such as cyclohexane or cyclohexene. Among others, it is preferable that at least one is a 6-membered ring group derived from an aromatic ring, and it is more preferable that one of 6-membered ring groups, which is linearly connected and is contained in the mesogenic group, is an aliphatic ring, and the remaining rings are all aromatic rings.

The liquid crystalline epoxy monomer represented by Formula (1) can be produced by a known method. For example, the liquid crystalline epoxy monomer represented by Formula (1) can be obtained by the production methods described in Japanese Patent No. 4619770, Japanese Patent Application Laid-Open (JP-A) No. 2011-98952, and Japanese Patent No. 5471975.

The resin composition in the present embodiment preferably contains at least one selected from the group consisting of 1-(3-methyl-4-oxiranylmethoxyphenyl)-4-(4-oxiranylmethoxyphenyl)-1-cyclohexene, 1-(3-methyl-4-oxiranylmethoxyphenyl)-4-(4-oxiranylmethoxyphenyl)benzene, 2-methyl-1,4-phenylene-bis{4-(2,3-epoxypropoxy)benzoate}, 4-{4-(2,3-epoxypropoxy)phenyl}cyclohexyl=4-(2,3-epoxypropoxy)-3-methylbenzoate, and 4-{4-(2,3-epoxypropoxy)phenyl}cyclohexyl=4-(2,3-epoxypropoxy)benzoate, as the liquid crystalline epoxy monomers represented by Formula (1), from the viewpoint of exhibiting a temperature range of 25°C or higher in which a liquid crystal phase is expressed, a high orientation property of the liquid crystal phase of a cured product, and excellent gas barrier properties.

A part of the liquid crystalline epoxy monomer represented by Formula (1) may be partially polymerized with a curing agent or the like to form a prepolymer. Liquid crystalline epoxy monomers are generally easy to crystallize and are often low in solubility in solvents. When at least a part of a liquid crystalline epoxy monomer is polymerized, crystallization of the liquid crystalline epoxy monomer tends to be suppressed. Therefore, in a case in which the liquid crystalline epoxy monomer is prepolymerized, the moldability of a resin composition tends to be improved.

A content of the specific thermosetting resin in the resin composition is not particularly limited. From the viewpoints of further improving physical properties and hydrogen gas barrier properties, the content of the specific thermosetting resin is, for example, preferably from 10% by mass to 95% by mass, and more preferably from 20% by mass to 95% by mass, still more preferably from 40% by mass to 95% by mass, and further more preferably from 60% by mass to 95% by mass, based on a total amount of the resin composition.

### (Mica)

The resin composition in the present embodiment contains mica. One type of mica may be used singly, or two or more types thereof may be used in combination. Examples of an embodiment in which two or more kinds of mica are used in combination include: an aspect in which two or more kinds of mica having the same component and different in average particle diameter or aspect ratio are used; an aspect in which two or more kinds of mica having the same average particle diameter or aspect ratio and different components are used; and an aspect in which two or more kinds of mica having different average particle diameter, aspect ratio, and component are used.

Examples of mica include a natural mica such as muscovite, phlogopite, or paragonite, and a synthetic mica. The synthetic mica may be either swellable mica or non-swellable mica.

The mica may be one having enhanced dispersibility in a thermosetting resin by a surface treatment such as a titanium coupling agent treatment or a silane coupling agent treatment. The mica may be intercalated with an organic substance or an inorganic substance to increase an aspect ratio or to have enhanced affinity with a thermosetting resin.

An average particle diameter of the mica is not particularly limited. From the viewpoints of hydrogen gas barrier properties, the average particle diameter of the mica is, for example, preferably from 0.1 µm to 100 µm, and more preferably from 1 µm to 50 µm.

The average particle diameter of the mica may be measured using a laser diffraction scattering particle size distribution measuring apparatus (for example, LS13 manufactured by Beckman Coulter, Inc.). A particle diameter (D50) at which the volume cumulative particle size distribution is 50% is defined as the "average particle diameter" of the mica.

An aspect ratio of mica is not particularly limited. For example, the aspect ratio of mica is preferably in the range from 1 to 2,000, and more preferably in the range from 10 to 1,000, from the viewpoint of further enhancing the hydrogen gas barrier properties due to a labyrinth effect.

The aspect ratio of the mica is obtained by dividing the average particle diameter by an average thickness. The average thickness of the mica can be obtained from the arithmetic mean of thicknesses of twenty pieces of the mica randomly measured with a scanning electron microscope (for example, S900 manufactured by Hitachi, Ltd.). The thickness of the mica means a value when an inter-face distance becomes minimum when the mica particle is sandwiched between two parallel faces.

A content of the mica in the resin composition is not particularly limited. From the viewpoints of further improving hydrogen gas barrier properties owing to labyrinth effect, the content of the mica is, for example, preferably from 5% by mass to 90% by mass, more preferably from 5% by mass to 80% by mass, still more preferably from 5% by mass to 60% by mass, and further more preferably from 5% by mass to 40% by mass, based on a total amount of the resin composition.

In the resin composition, the mica is preferably dispersed as uniformly as possible. By uniformly dispersing the mica, permeation of hydrogen gas is suppressed at a portion where a content of the mica is low, whereby it can be expected that hydrogen gas barrier properties sufficiently improve.

### (Curing Agent)

The resin composition in the present embodiment preferably contains a curing agent. The curing agent may be used singly, or two or more kinds thereof in combination.

The curing agent is not particularly limited as long as a thermosetting resin can be thermally cured. Examples of the curing agent when the thermosetting resin is an epoxy resin include a polyaddition type curing agent such as an acid anhydride curing agent, an amine curing agent, a phenol curing agent, or a mercaptan curing agent, and a catalyst type curing agent such as imidazole. Among them, at least one selected from the group consisting of an amine curing agent and a phenol curing agent is preferable from the viewpoint of heat resistance.

As the amine curing agent, those commonly used can be used without particular limitation and those which are commercially available may be used. Among these, from the viewpoint of curability, a polyfunctional curing agent having two or more functional groups is preferable, and from the viewpoint of thermal conductivity, a polyfunctional curing agent having a rigid structure is more preferable.

Examples of the bifunctional amine curing agent include 3,3'-diaminodiphenyl sulfone, 4,4'-diaminodiphenyl sulfone, 4,4'-diaminodiphenyl methane, 4,4'-diaminodiphenyl ether, 4,4'-diamino-3,3'-dimethoxybiphenyl, 4,4'-diaminophenyl benzoate, 1,5-diaminonaphthalene, 1,3-diaminonaphthalene, 1,4-diaminonaphthalene, and 1,8-diaminonaphthalene.

Commonly used phenol curing agents can be used without particular limitation, and commercially available low molecular phenol compounds and phenolic resins obtained by converting them into novolaks can be used.

Examples of the low-molecular phenolic compound include a monofunctional compound such as phenol, *o*-cresol, *m*-cresol, or *p*-cresol; a bifunctional compound such as catechol, resorcinol, or hydroquinone; and a trifunctional compound such as 1,2,3-trihydroxybenzene, 1,2,4-trihydroxybenzene, or 1,3,5-trihydroxybenzene. A phenol novolak resin obtained by connecting these low molecular weight phenol compounds with methylene chain or the like to form a novolak can also be used as a curing agent.

In a case in which the resin composition in the present embodiment contains a curing agent, a content of the curing agent in the resin composition is not particularly limited. For example, in a case in which the thermosetting resin is an epoxy resin and the curing agent is an amine curing agent, from the viewpoint of efficiently performing a curing reaction, the ratio of an equivalent number of active hydrogen of amine curing agent (number of equivalents of amine) to an equivalent number of epoxy group of epoxy resin (the equivalent number of amine / the equivalent number of epoxy group) is, for example, preferably from 0.3 to 3.0, and more preferably from 0.5 to 2.0. Further, in a case in which the thermosetting resin is an epoxy resin and the curing agent is a phenol curing agent, the ratio of an equivalent number of an active hydrogen of the phenol curing agent (the equivalent number of phenolic hydroxyl group) to an equivalent number of an epoxy group of the epoxy resin (the equivalent number of phenolic hydroxyl group/ the equivalent number of epoxy group) is preferably, for example, from 0.3 to 3.0, and more preferably from 0.5 to 2.0.

### (Method of Preparing Resin Composition)

As the method of preparing the resin composition in the present embodiment, a commonly used method of preparing a resin composition can be used without particular limitation. For example, the resin composition in the present embodiment can be prepared by mixing the specific thermosetting resin and the curing agent used if necessary, heating, adding the mica thereto after the specific thermosetting resin has melted, and further mixing.

### (Hydrogen Gas Barrier Material)

A hydrogen gas barrier in the present embodiment contains the resin composition described above.

The cured product of the resin composition in the present embodiment is excellent in physical properties and hydrogen gas barrier properties. Therefore, the resin composition in the present embodiment can be suitably used for applications requiring physical properties and hydrogen gas barrier properties.

### < Cured Product >

The cured product in the present embodiment is obtained by curing the above-described resin composition or hydrogen gas barrier material.

The cured product in the present embodiment can be produced by curing the above-described resin composition or hydrogen gas barrier material. The method of the curing treatment can be appropriately selected depending on the composition of the resin composition or the hydrogen gas barrier material, the use of the cured product, and the like, and is preferably a heat treatment. The cured product in the present embodiment can be obtained, for example, by heating the resin composition or the hydrogen gas barrier material at from 120°C to 270°C for 0.1 hour to 10 hours, preferably at from 140°C to 240°C for 1 hour to 8 hours.

The cured product in the present embodiment is excellent in physical properties and hydrogen gas barrier properties. The cured product in the present embodiment preferably has a hydrogen gas permeability coefficient at 25°C of 4.0 × 10⁻¹¹ cm³·cm/(cm²·s·cmHg) or less.

The hydrogen gas permeability coefficient of the cured product can be calculated from a transmittance in a range from 22 hours to 24 hours after measuring the hydrogen gas permeability over 24 hours, according to JIS K7126-1: 2006. As an evaluation device, a gas permeability measurement device (for example, BT-3, manufactured by Toyo Seiki Seisaku-sho, Ltd.) can be used.

### < Composite Material >

A composite material in the present embodiment includes: a cured layer containing the above-described cured product; and a carbon fiber-containing layer that is provided on or above one side or both sides of the cured layer and that comprises carbon fibers. Examples of the carbon fiber-containing layer include a layer made of carbon fiber reinforced plastic. By including the carbon fiber-containing layer in addition to the cured layer, the physical properties can be greatly improved as compared with a case without the carbon fiber containing layer. The composite material in the present embodiment can be used, for example, for manufacturing a high pressure hydrogen storage tank for on-vehicle use.

Each of average thicknesses of the cured layer and the carbon fiber-containing layer is not particularly limited. The average thickness of the cured layer is, for example, preferably from 0.01 mm to 10 mm, and more preferably from 0.05 mm to 5 mm. The average thickness of the carbon fiber-containing layer is, for example, preferably from 1mm to 300 mm, and more preferably from 5 mm to 100 mm. Each of the average thicknesses of the cured layer and the carbon fiber-containing layer may be obtained as an arithmetic average value of the thicknesses at arbitrary 5 points.

### (Structure)

The structure in the present embodiment includes: an object to be coated; and a cured layer that is provided on the object to be coated and that contains the above-described resin composition or the cured product of the hydrogen gas barrier material.

Since the resin composition and the hydrogen gas barrier material in the present embodiment can be used, for example, for manufacturing liners and the like of a high pressure hydrogen storage tank for on-vehicle use, an object to be coated may be a high pressure hydrogen storage tank. A carbon fiber-containing layer containing carbon fibers may be provided on or above one side or both sides of the cured layer.

### Examples

Hereinafter, the present invention will be described more specifically with reference to Examples, but the present invention is not limited to these Examples.

The thermosetting resins used in the preparation of the resin composition and their abbreviations are shown below.
- Resin A (see Japanese Patent No. 5471975) 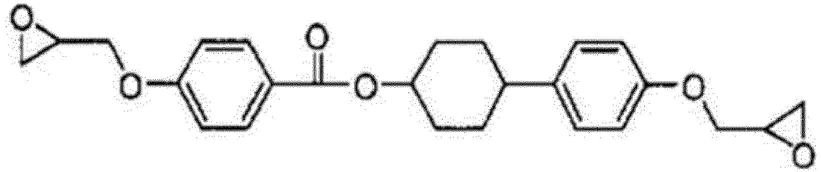
- Resin B (see Japanese Patent No. 4619770)

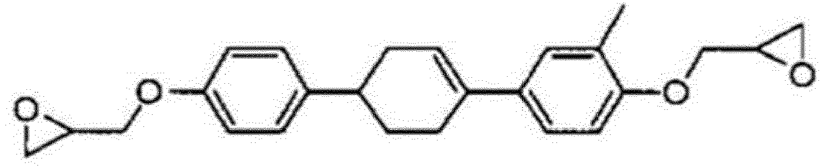

### < Example 1 >

Resin A: 62.6 parts by mass, and 4,4'-diaminodiphenyl sulfone (manufactured by Wako Pure Chemical Industries, Ltd.): 17.4 parts by mass were placed in a stainless steel petri dish, and heated to 180°C on a hot plate. After the resin in the stainless steel petri dish was melted, mica (SJ-005, manufactured by Yamaguchi Mica Co., Ltd., aspect ratio: 20): 20.0 parts by mass was added to the stainless steel petri dish, and the mixture was stirred for 5 minutes. After stirring, vacuum degassing was carried out for 5 minutes, and then, heating was carried out at 180°C for 1 hour. After cooling to normal temperature (25°C), the sample was taken out from the stainless steel petri dish, and heated in an oven at 230°C for 1 hour to complete curing. The obtained cured product was polished by a rotary polishing machine to have a thickness of 2 mm to obtain a test piece.

### < Example 2 >

A test piece was produced by the same manner as described in Example 1, except that Resin A: 70.5 parts by mass, 4,4'-diaminodiphenyl sulfone: 19.5 parts by mass, and mica: 10.0 parts by mass were used.

### < Example 3 >

A test piece was produced by the same manner as described in Example 1, except that Resin B: 61.1 parts by mass, 4,4'-diaminodiphenyl sulfone: 18.9 parts by mass, and mica: 20.0 parts by mass were used.

### < Example 4 >

A test piece was produced by the same manner as described in Example 1, except that Resin B: 68.8 parts by mass, 4,4'-diaminodiphenyl sulfone: 21.2 parts by mass, and mica: 10.0 parts by mass were used.

### < Comparative Example 1 >

A test piece was produced by the same manner as described in Example 1, except that biphenyl type epoxy resin (manufactued by Mitsubishi Chemical Co., Ltd, YL6121H): 59.1 parts by mass, 4,4'-diaminodiphenyl sulfone: 20.9 parts by mass, and mica: 20.0 parts by mass were used.

### < Comparative Example 2 >

A test piece was produced by the same manner as described in Example 1, except that biphenyl type epoxy resin (manufactued by Mitsubishi Chemical Co., Ltd, YL6121H): 66.4 parts by mass, 4,4'-diaminodiphenyl sulfone: 23.6 parts by mass, and mica: 10.0 parts by mass were used.

### < Comparative Example 3 >

A test piece was produced by the same manner as described in Example 1, except that bisphenol A type epoxy resin (manufactued by Mitsubishi Chemical Co., Ltd, YL980): 60.0 parts by mass, 4,4'-diaminodiphenyl sulfone: 20.0 parts by mass, and mica: 20.0 parts by mass were used.

### < Comparative Example 4 >

A test piece was produced by the same manner as described in Example 1, except that bisphenol A type epoxy resin (manufactued by Mitsubishi Chemical Co., Ltd, YL980): 67.5 parts by mass, 4,4'-diaminodiphenyl sulfone: 22.5 parts by mass, and mica: 10.0 parts by mass were used.

### < Comparative Example 5 >

A test piece was produced by the same manner as described in Example 1, except that Resin A: 78.3 parts by mass, and 4,4'-diaminodiphenyl sulfone: 21.7 parts by mass were used.

### < Comparative Example 6 >

A test piece was produced by the same manner as described in Example 1, except that Resin B: 76.4 parts by mass, and 4,4'-diaminodiphenyl sulfone: 23.6 parts by mass were used.

### < Evaluation >

### (Confirmation of High Order Structure)

In Examples 1 to 4 and Comparative Examples 1 to 6, a resin composition dissolved at 180°C was thinly coated on a slide glass, and heated at 180°C for 1 hour to prepare a sample of a cured product. The obtained sample was observed with a polarizing microscope (ECLIPSE LV100POL, manufactured by Nikon Corporation), and the presence or absence of formation of a high order structure was confirmed. In a case in which the cured product forms a high order structure, interference fringes due to depolarization can be seen in observation in a crossed-Nicols state.

Then, in a case in which the formation of a high order structure was confirmed by observation with a polarizing microscope, the test piece was analyzed using an X-ray diffraction apparatus (manufactured by Rigaku Corporation), and the presence or absence of the formation of a smectic structure was confirmed. X-ray diffraction measurement was carried out using CuKα1 rays under the conditions of, tube voltage: 40 kV, tube current: 20 mA, and measurement range: 2θ being from 2° to 30°. In a case in which there is a peak in the range of 2θ being from 2° to 5°, it can be determined that a smectic structure is formed, and in a case in which there is no peak in the range of 2θ being from 2° to 5°, it can be determined that a nematic structure is formed. The results are shown in Table 1.

### (Evaluation of Hydrogen Gas Permeability Coefficient)

For the test pieces of Examples 1 to 4 and Comparative Examples 1 to 6, according to JIS K7126-1: 2006, a permeability of hydrogen gas at 25°C was measured over 24 hours, and a hydrogen gas permeability coefficient was calculated from the range from 22 hours to 24 hours. As the evaluation device, a gas permeability measurement device (BT-3, manufactured by Toyo Seiki Seisaku-sho, Ltd.) was used. The results are shown in Table 1.

**[Table 1]**

| | High order structure | Hydrogen gas permeability coefficient (cm³·cm/(cm²·s·cmHg) |
|---|---|---|
| Example 1 | Smectic structure | 3.57×10⁻¹¹ |
| Example 2 | Smectic structure | 3.81×10⁻¹¹ |
| Example 3 | Smectic structure | 3.37×10⁻¹¹ |
| Example 4 | Smectic structure | 3.76×10⁻¹¹ |
| Comparative Example 1 | Nematic structure | 6.22×10⁻¹¹ |
| Comparative Example 2 | Nematic structure | 6.40×10⁻¹¹ |
| Comparative Example 3 | None | 7.87×10⁻¹¹ |
| Comparative Example 4 | None | 8.53×10⁻¹¹ |
| Comparative Example 5 | Nematic structure | 4.20×10⁻¹¹ |
| Comparative Example 6 | Nematic structure | 4.07×10⁻¹¹ |

As can be seen from Table 1, compared to Examples 1 to 4 in which the test piece forms a smectic structure, the hydrogen gas permeability coefficients of Comparative Examples 1 and 2 in which the test piece forms a nematic structure show high values. The hydrogen gas permeability coefficients of Comparative Examples 3 and 4 in which the test piece does not form a high order structure show higher values than Comparative Examples 1 and 2. These results suggest that hydrogen gas barrier properties are improved by the formation of a high order structure, and among them, an effect of improving hydrogen gas barrier properties of a smectic structure is high.

By comparing Examples 1 and 2 with Comparative Example 5, it is found that the hydrogen gas permeability coefficient decreases when mica is dispersed in a resin composition. The same can be found by comparing Examples 3 and 4 with Comparative Example 6. These results suggest that hydrogen gas barrier properties are improved by a labyrinth effect of mica. Further, it is also found that the hydrogen gas barrier property is further improved by increasing the content of mica in the resin composition.

The entire contents of the disclosure by Japanese Patent Application No. 2016-076016 filed on April 5, 2016 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. A resin composition, comprising:
a thermosetting resin that has a mesogenic group in a molecule and that is capable of forming a smectic structure via a curing reaction; and
mica.

2. The resin composition according to claim 1, further comprising a liquid crystalline epoxy monomer represented by the following Formula (1): 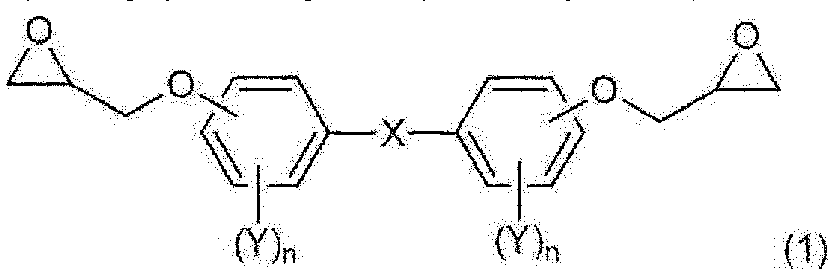 wherein, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12:

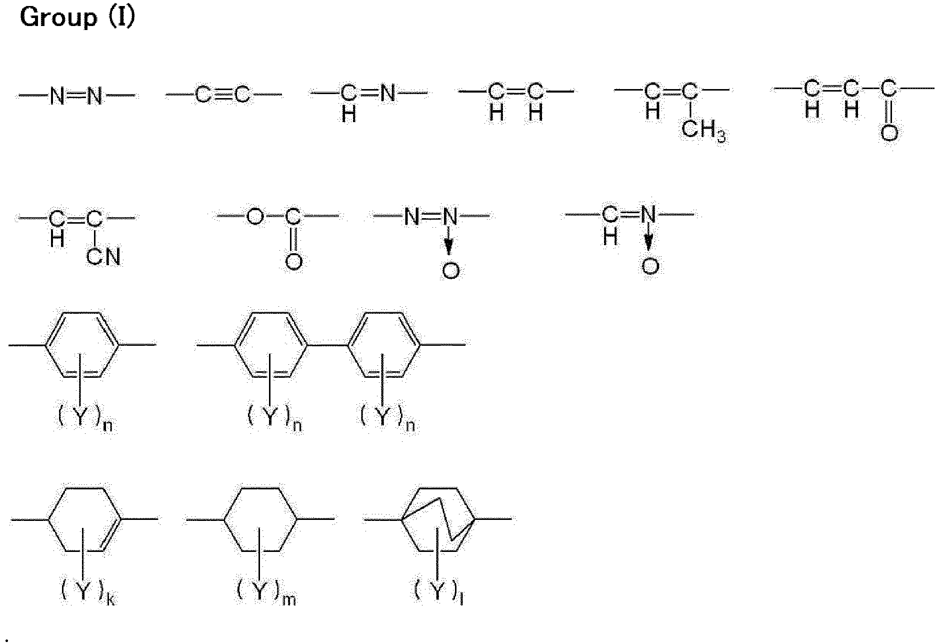

3. The resin composition according to claim 1 or 2, wherein a content of the mica is from 5% by mass to 90% by mass.

4. The resin composition according to any one of claims 1 to 3, wherein an aspect ratio (average particle diameter/ average thickness) of the mica is in a range of from 1 to 2,000.

5. A hydrogen gas barrier material comprising the resin composition according to any one of claims 1 to 4.

6. A cured product obtained by curing the resin composition according to any one of claims 1 to 4 or the hydrogen gas barrier material according to claim 5.

7. The cured product according to claim 6, wherein a hydrogen gas permeability coefficient at 25°C is 4.0 × 10⁻¹¹cm³·cm/(cm²·s·cm Hg) or less.

8. A composite material, comprising:
a cured layer comprising the cured product according to claim 6 or 7; and
a carbon fiber-containing layer that is provided on or above one side or both sides of the cured layer and that comprises carbon fibers.

9. A structure, comprising:
an object to be covered; and
a cured layer that is provided on or above the object to be covered and that comprises the resin composition according to any one of claims 1 to 4 or the cured product of the hydrogen gas barrier material according to claim 5.

10. The structure according to claim 9, wherein the object to be covered is a high pressure hydrogen storage tank.

11. The structure according to claim 9 or 10, further comprising a carbon fiber-containing layer that is provided on or above one side or both sides of the cured layer and that comprises carbon fibers.
